# EUROPÄISCHE PATENTSCHRIFT

(11) **EP 1 911 637 B1**
(45) Veröffentlichungstag und Bekanntmachung des Hinweises auf die Patenterteilung: **28.11.2012**
(21) Anmeldenummer: 07115889.3
(22) Anmeldetag: 07.09.2007
(51) Int. Cl.: B60R 21/34, B60R 21/013

(54) **Steuergerät zur Ansteuerung eines Fahrzeugsystems und Verfahren zur Ansteuerung eines Fahrzeugsystems**
Actuating device for actuating a vehicle system and method for actuating a vehicle system
Appareil de commande destiné à la commande d'un système de véhicule et procédé de commande d'un système de véhicule

(30) Priorität: 11.10.2006 DE 102006048057
(43) Veröffentlichungstag der Anmeldung: 16.04.2008
(73) Patentinhaber: ROBERT BOSCH GMBH, 70442 Stuttgart (DE)
(72) Erfinder: Steinkogler, Sascha, 79106 Freiburg (DE); Weyer, Tim, 71701 Schwieberdingen (DE)

(56) Entgegenhaltungen:
- EP-A- 0 914 992
- US-A1- 2003 051 936

## Beschreibung

### Stand der Technik

Die Erfindung betrifft ein Steuergerät bzw. ein Verfahren zur Ansteuerung eines Fahrzeugsystems nach der Gattung der unabhängigen Patentansprüche.

Aus DE 102 004 042 381 A1 ist bereits ein Verfahren zur Erzeugung eines Auslösesignals für eine Fußgängerschutzvorrichtung bekannt. Dabei kann die Fahrzeugeigengeschwindigkeit bei der Bestimmung dieses Auslösesignals berücksichtigt werden, wobei die Fahrzeugeigengeschwindigkeit über den CAN-Bus verfügbar ist, beispielsweise aufgrund einer Raddrehzahluntersuchung, die zur Bestimmung der Fahrzeugeigengeschwindigkeit führt.

Nun kann es jedoch vorkommen, dass bei einem Bremsvorgang ein sogenannter Schlupf auftritt, so dass die mittels der Raddrehzahl bestimmte Fahrzeugeigengeschwindigkeit nicht die tatsächliche Fahrzeuggeschwindigkeit ist.

Aus EP 0 914 992 A1 ist gemäβ dem Oberbegriff des Anspruchs 1 ein Gerät zur Bestimmung einer Geschwindigkeit und ein System zum Anheben der Fronthaube eines Fahrzeugs bekannt, um ein Fußgängerschutzsystem zu verwirklichen. Die Geschwindigkeitsbestimmung erfolgt auf Basis eines Geschwindigkeitssignals und von Signalen von einem ABS-Steuergerät. Dabei werden Signale von Sensoren, die einen Temperatursensor oder einer Wischereinheit berücksichtigt. Auch eine Beschleunigung wird hierbei mit einbezogen.

### Offenbarung der Erfindung

Das erfindungsgemäße Steuergerät zur Ansteuerung eines Fahrzeugsystems bzw. das erfindungsgemäße Verfahren zur Ansteuerung eines Fahrzeugsystems mit den Merkmalen der unabhängigen Patentansprüche haben demgegenüber Vorteile. Es ist bekannt, dass die Ansteuerung nunmehr berücksichtigt, ob es zu einem Bremsvorgang kommt, um damit auf einen Schlupf einzugehen. Damit wird die Ansteuerung des Fahrzeugsystems genauer und präziser. Die Abweichungen durch einen Schlupf können unter Umständen über 100% sein. Das Fahrzeugsystem, das erfindungsgemäß angesteuert wird, wird jedoch nur dann angesteuert, wenn die Fahrzeuggeschwindigkeit innerhalb eines Intervalls liegt. Dies ist insbesondere bei Fußgängerschutzsystemen der Fall. Es kann jedoch sein, wie es auch bei anderen Fahrzeugsystemen, wie einem Leuchtsystem, insbesondere einem intelligenten Kurvenlicht oder einem Anzeigensystem einzusetzen. Dadurch, dass die Ansteuerung in Abhängigkeit von dem Signal eines Fahrdynamiksystems und/oder eines Bremssystems beeinflusst wird, ist es möglich auf den Schlupf präzise einzugehen. Insbesondere ist diese Beeinflussungsmöglichkeit im Steuergerät vorhanden, so dass eine autarke Lösung vorliegt, die für viele Fahrzeugtypen mit unterschiedlichen Ausstattungsvarianten einsetzbar ist. Durch diese Beeinflussungsmöglichkeit ist eine einfache Lösung des Problems gegeben. Insbesondere ist so eine korrekte Anwendung des Fahrzeugsystems, das angesteuert werden soll, möglich, denn dieses soll ja nur innerhalb des spezifizierten Fahrzeuggeschwindigkeitsintervalls angesteuert werden. Eine Ansteuerung außerhalb dieses Intervalls würde einen bedeutenden Fehler darstellen, der so auf einfache Art und Weise vermieden wird.

Erfindungsgemäß ist, dass die Beeinflussung dadurch erreicht wird, dass die obere oder untere Intervallgrenze um einen jeweiligen Wert verschoben werden. Damit wird anerkannt, dass der gemessene Wert der Fahrzeuggeschwindigkeit oder Fahrzeugeigengeschwindigkeit einem Schlupf unterliegt, aber dafür diese Intervallgrenzen entsprechend angepasst werden. Dies kann um einen festen Wert geschehen oder um einen adaptiv veränderbaren Wert, der in Abhängigkeit von der Fahrzeuggeschwindigkeit zu einem bestimmten Zeitpunkt, beim Einsetzen einer Fahrdynamikregelung, verändert werden kann. Auch eine Geschwindigkeitsdifferenz kann als Abhängigkeitsgröße für die Veränderung der Intervallgrenze verwendet werden. Diese Geschwindigkeitsdifferenz bestimmt sich aus dem Zeitintervall der Aktivierung einer Fahrdynamikregelung, wobei diese Differenzgröße einen Rückschluss auf die Fahrbahnoberflächenbeschaffenheit zulässt. Ist diese Differenzgröße vergleichsweise groß, bedeutet dies eine gute Haftung, da ein großer Geschwindigkeitsabbau in einem vorgegebenen Zeitintervall möglich ist. Dabei kann es sich beispielsweise um heißen staubfreien Asphalt handeln, während eine kleine Differenzgröße bedeutet, dass nur ein geringer Geschwindigkeitsabbau in einem vorgegebenen Zeitintervall möglich ist, so dass diese auf eine glatte Oberfläche, z. B. Glatteis schließen lässt. Die Intervallgrenzen können jedoch auch von einem Zeitintervall zwischen einer Aktivierung einer Fahrdynamikregelung und dem Überschreiben der oberen oder unteren Geschwindigkeitsgrenze abhängen.

Durch die in den abhängigen Ansprüchen aufgeführten Maßnahmen und Weiterbildungen sind vorteilhafte Verbesserungen des in den unabhängigen Patentansprüchen angegebenen Steuergeräts zur Ansteuerung von einem Fahrzeugsystem bzw. des in den unabhängigen Patentansprüchen angegebenen Verfahrens zur Ansteuerung eines Fahrzeugsystems möglich.

Es ist möglich, die Beeinflussung dadurch zu erreichen, dass die Ansteuerung um ein Zeitintervall verzögert oder verlängert wird. Dies bedeutet, dass die Ansteuerung erst etwas später einsetzt bei einer Verzögerung oder es noch etwas länger dauert, um der Schlupfeinwirkung auf die Fahrzeuggeschwindigkeit Rechnung zu tragen.

Die Beeinflussung kann auch dadurch erreicht werden, dass die Fahrzeuggeschwindigkeit, also der gemessene Wert, selbst verändert wird, um dadurch eine bessere Abschätzung oder Annäherung an die reale Geschwindigkeit zu erhalten. Dies kann in einfacher Art und Weise, beispielsweise durch Addition eines konstanten Wertes erreicht werden, oder auch durch einen adaptiv bestimmten Wert, der von verschiedenen Parametern abhängen kann.

Ausführungsbeispiele der Erfindung sind in der Zeichnung dargestellt und werden in der nachfolgenden Beschreibung näher erläutert.

Es zeigen:
- Figur 1: ein Blockschaltbild des erfindungsgemäßen Steuergeräts in Verbindung mit angeschlossenen Vorrichtungen,
- Figur 2: ein Blockschaltbild des erfindungsgemäßen Verfahrens,
- Figur 3: ein erstes Geschwindigkeitszeitdiagramm und
- Figur 4a und b: zwei weitere Geschwindigkeitszeitdiagramme.

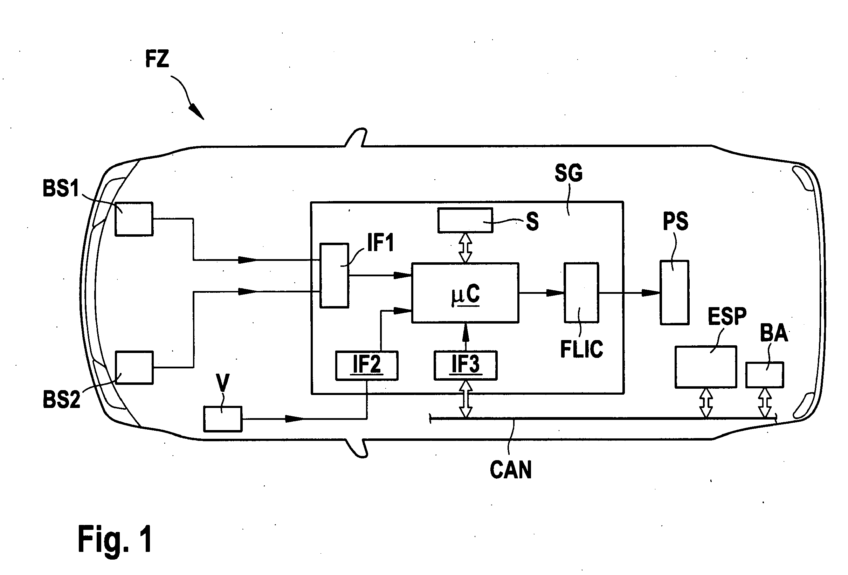

Figur 1 erläutert in einem Blockschaltbild das erfindungsgemäße Steuergerät in Verbindung mit angeschlossenen Komponenten im Fahrzeug. Das Steuergerät SG befindet sich in einem Fahrzeug FZ, beispielsweise im Bereich des Fahrzeugtunnels. Je nach Inhalt des Steuergeräts SG und anderen Anforderungen sind auch andere Einbauorte möglich. Vorliegend wird das Steuergerät SG zur Ansteuerung von Fußgängerschutzmitteln PS verwendet. Diese Ansteuerung ist vorzugsweise im Steuergerät zur Ansteuerung von Personenschutzmitteln im Allgemeinen integriert. Vorliegend werden jedoch nur die Komponenten dargestellt, die zur Durchführung des Fußgängerschutzes und zum Verständnis der Erfindung notwendig sind.

Im Frontbereich des Fahrzeugs FZ befinden sich zwei Beschleunigungssensoren BS1 und BS2, die über Leitungen an das Steuergerät SG und dort eine Schnittstelle IF1 angeschlossen sind. Die Beschleunigungssensoren BS1 und BS2 weisen mikromechanisch hergestellte Beschleunigungsaufnehmer auf, die eine Beschleunigung kapazitiv messen, wobei dieser kapazitive Wert in einen Spannungswert gewandelt wird, der verstärkt, gefiltert und digitalisiert wird. Dieser Wert wird dann digital an die Schnittstelle IF1 übertragen, wobei die Verbindung zwischen den Beschleunigungssensoren BS1 und BS2 und der Schnittstelle IF1 Punkt zu Punkt ausgebildet ist, wobei alternativ eine Busverbindung möglich ist. Die Beschleunigungssensoren BS1 und BS2 erhalten ihre Energie über diese Leitung. Das Beschleunigungssensorelement ist vorliegend in Fahrzeuglängsrichtung empfindlich, es kann jedoch auch zusätzlich oder anstatt in andere Richtungen empfindlich sein. Der Einbauort der Beschleunigungssensoren BS1 und BS2 ist hinter der Stoßfängerverkleidung. Vorliegend sind zwei Beschleunigungssensoren BS1 und BS2 dargestellt, es können jedoch mehr Beschleunigungssensoren vorgesehen sein.

Die Schnittstelle IF1 ist vorliegend als integrierter Schaltkreis vorhanden, sie kann diskret oder aus mehreren integrierten Schaltkreisen ausgebildet sein, es ist sogar möglich, dass die Schnittstelle IF1 als Softwareschnittstelle auf einem Prozessor vorhanden ist, beispielsweise dem Mikrocontroller µC, der das zentrale Element des Steuergeräts SG ist. Die Schnittstelle IF1 überträgt ihre Daten an den Mikrocontroller µC, beispielsweise über einen sogenannten SPI (Serial Peripherial Interface Bus). Andere Übertragungsmoden sind möglich. Ein Fahrzeuggeschwindigkeitssensor V, beispielsweise mittels einer Raddrehzahlmessung, ist an eine zweite Schnittstelle IF2 des Steuergeräts SG angeschlossen. Auch für diese Schnittstelle IF2 gilt, dass diese als integrierter Schaltkreis ausgebildet ist. Die Schnittstelle IF2 überträgt die empfangene Geschwindigkeit an den Mikrocontroller µC. Auch hier kann eine SPI-Verbindung vorgesehen sein, die es auch dem Mikrocontroller µC ermöglicht, Daten von den Schnittstellen IF1 und IF2 abzufragen. Über einen CAN-Controller IF3, der als dritte Schnittstelle im Steuergerät SG vorgesehen ist, werden Daten, die auf dem CAN-Bus CAN vorhanden sind, an den Mikrocontroller µC übertragen. Dazu gehören hier Signale von einer Fahrdynamikregelung ESP und einem Bremssystem BA. Auch der CAN-Controller IF3 ist an den Mikrocontroller µC angeschlossen, auch hier über einen SPI-Bus.

Der Mikrocontroller µC nutzt einen Speicher S mit beschreibbaren und nicht beschreibbaren Teilen zum Laden von Daten und Zwischenspeichern von Daten beim Ausführen von Programmen. Anstatt eines Mikrocontrollers können auch andere Prozessortypen oder anwendungsspezifische Schaltkreise oder diskrete Auswertebausteine verwendet werden. Es ist möglich auch mehr Rechner zu verwenden.

In Abhängigkeit von den bereitgestellten Signalen berechnet der Mikrocontroller µC einen Fußgängerschutzalgorithmus, wobei die Signale der Beschleunigungssensoren BS1 und BS2 als Aufprallsignale verwendet werden und in Abhängigkeit von der Fahrzeuggeschwindigkeit festgelegt wird, ob im Fahrzeuggeschwindigkeitsbereich der vorliegt, eine Ansteuerung des Fußgängerschutzsystems möglich ist oder nicht. Die Fahrzeuggeschwindigkeit kann darüber hinaus zur Einstellung von Schwellen verwendet werden, um den Fußgängerschutzalgorithmus adaptiv auszubilden. Erfindungsgemäß nutzt der Mikrocontroller µC das Signal der Fahrdynamikregelung ESP oder des Bremsassistenten BA dazu, einen möglichen Schlupf bei der Geschwindigkeit des Fahrzeugs zu berücksichtigen. Damit gelingt dann eine genauere Ansteuerung des Fußgängerschutzsystems.

Kommt der Mikrocontroller µC anhand der ihm zugeführten Signale dazu, dass die Fußgängerschutzmittel, wie eine anhebbare Fronthaube oder Außenairbags anzusteuern sind, dann erzeugt der Mikrocontroller µC ein Ansteuersignal, das ebenfalls über eine SPI-Bus an eine Zündkreisschaltung FLIC übertragen wird. In Abhängigkeit von diesem Ansteuersignal sorgt die Zündkreisschaltung FLIC dafür, dass die Personenschutzmittel PS angesteuert werden.

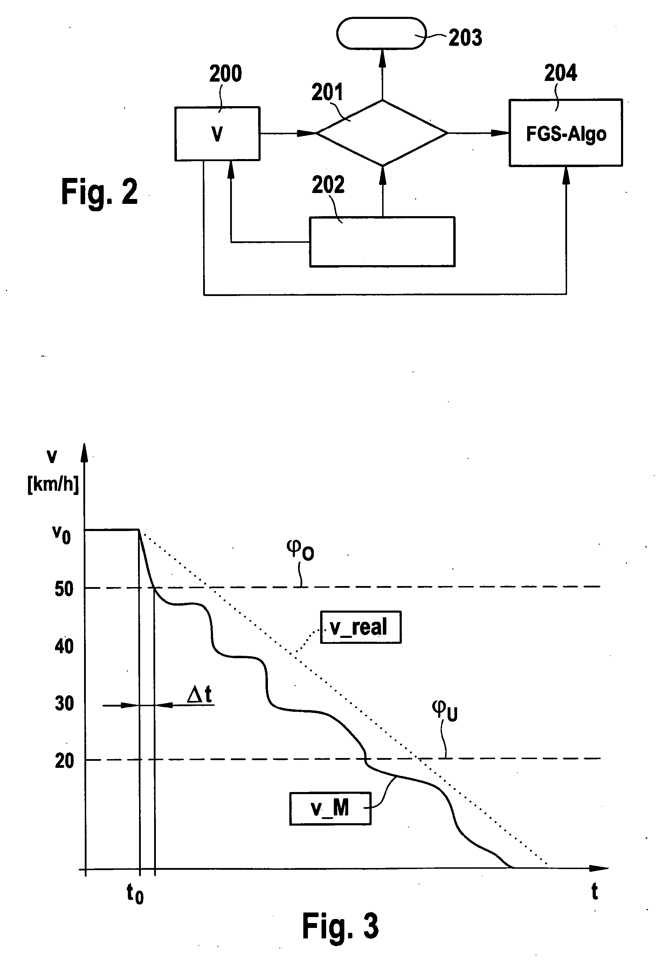

Figur 2 erläutert in einem Flussdiagramm den Ablauf des erfindungsgemäßen Verfahrens. In Verfahrensschritt 200 wird die Fahrzeuggeschwindigkeit V bereitgestellt, die beispielsweise über eine Raddrehzahlsensorik vorliegt. Wie oben dargestellt, kann diese Fahrzeugeigengeschwindigkeit aufgrund des Schlupfes fehlerbehaftet sein, d. h. nicht die wahre Fahrzeuggeschwindigkeit wiedergeben. Daher sind erfindungsgemäß Einflussnahmen auf diese Ansteuerungsentscheidungen notwendig, die über den Block 202 geschehen. Die Beeinflussung kann beispielsweise beim Geschwindigkeitssignal selber einsetzen, indem das Geschwindigkeitssignal derart verändert wird, dass es dem wahren Geschwindigkeitssignal näher kommt. Dies kann beispielsweise durch das Addieren eines Offsetwertes erreicht werden, der konstant oder adaptiv ausgebildet ist. Diese Größe kann von Geschwindigkeitsdifferenzwerten, wie oben angegeben, von der Geschwindigkeit beim Einsetzen der Fahrdynamikregelung oder von den Zeiten der Überschreitung der oberen oder unteren Intervallgrenze abhängen. Der Differenzwert muss dabei laufend bestimmt werden, da der Auslösezeitbereich bei einem Fußgängeraufprall kleiner ist, als die Aktualisierungsrate der Fahrzeuggeschwindigkeit. Das Zeitintervall der beiden Geschwindigkeiten kann der Geschwindigkeitsabtastrate entsprechen. Um mögliche Fehler aufgrund eines falschen Geschwindigkeitswertes oder kurzzeitiger Ausfall der Geschwindigkeitsinformation zu begegnen, können mehrere aufeinanderfolgende Geschwindigkeitsdifferenzen gespeichert und einer statistischen Analyse unterzogen werden. Zu einer Plausibilisierung der geschätzten Geschwindigkeit kann folgenden Relation verwendet werden: v_real ist größer als V_M, wobei v_real die wahre Geschwindigkeit ist und V_M die gemessene Geschwindigkeit.

Die Beeinflussung des Blocks 202 kann jedoch auch am Block 201 vorgenommen werden, der die Geschwindigkeit mit den Intervallgrenzen überprüft. Hier können die Intervallgrenzen verwendet werden, oder es kann vorgesehen sein, dass über die Intervallgrenzen hinaus eine Verlängerung der Aktivierung des Fußgängerschutzsystems oder eine Verzögerung des Fußgängerschutzsystems vorgenommen werden können. Wurde in Verfahrensschritt 201 nämlich festgestellt, dass die Geschwindigkeit außerhalb dieser gegebenenfalls veränderten Intervallgrenzen liegt, dann endet das Verfahren in Verfahrensschritt 203. Liegt jedoch der Geschwindigkeitswert innerhalb dieser Intervallgrenzen, dann startet in Verfahrensschritt 204 der Fußgängerschutzalgorithmus. Dieser Fußgängerschutzalgorithmus berücksichtigt die Fahrzeuggeschwindigkeit in der oben beschriebenen Weise, um Schwellwerte adaptiv anzupassen.

Figur 3 zeigt ein erstes Geschwindigkeitszeitdiagramm. Daher sind auf der Abszisse die Zeit aufgetragen und auf der Ordinate die Geschwindigkeit. Die durchgezogene Kurve zeigt die gemessene Geschwindigkeit v_M. Die gepunktete Linie zeigt die tatsächliche Geschwindigkeit v_real. Bei 20 und 50 km/h sind jeweils die untere und die obere Intervallgrenze ϕᵤ und ϕₒ gestrichelt dargestellt. Der Einsatz der Fahrdynamikregelung oder des Bremsassistenten setzt bei v0 ein. Dies ist auch im Zeitpunkt t0 dargestellt. Die Zeit Δt ist die Zeit vom Einsetzen der Fahrdynamikregelung bis zum Unterschreiten der oberen Intervallgrenze ϕₒ.

Figur 3 zeigt die verschiedenen erfindungsgemäßen Optionen, um die aufgrund es Schlupfeffekts zu niedrig gemessene Geschwindigkeit zu kompensieren. Zunächst können in Richtung der Ordinate die Intervallgrenzen (ϕₒ und (ϕᵤ verändert werden oder es kann in Richtung der Abszisse eine Zeitveränderung vorgenommen werden, oder die gemessene Geschwindigkeit kann selbst in Richtung der wirklichen Geschwindigkeit angepasst werden.

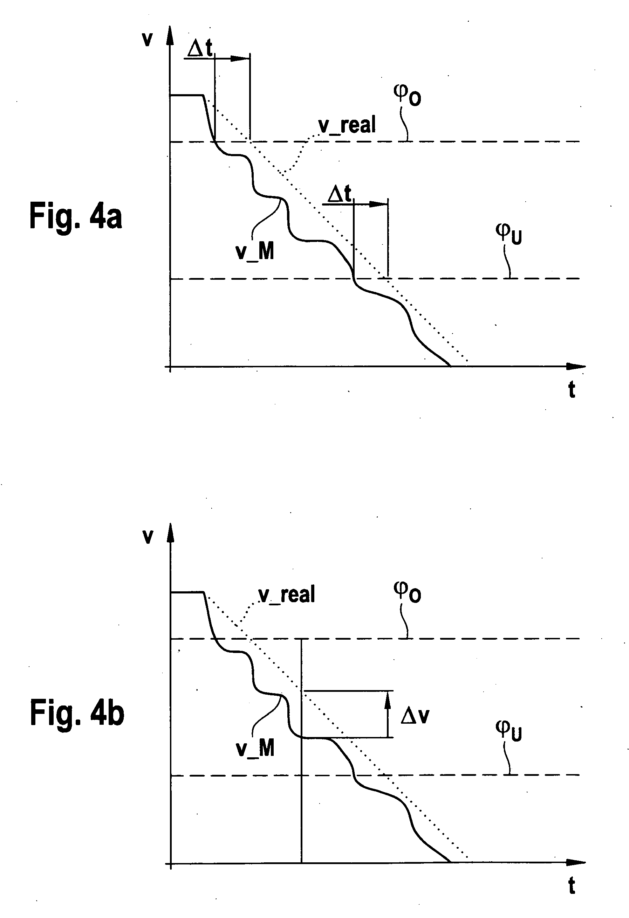

Figur 4a erläutert in einem weiteren Geschwindigkeitszeitdiagramm das nach dem Unterschreiten der oberen Intervallgrenze (ϕₒ eine Zeitverzögerung Δt eingeführt werden kann und/oder nach dem Unterschreiten der unteren Intervallgrenze ϕᵤ eine Verzögerungszeit Δt in der das Fußgängerschutzsystem noch aktiv ist. Ansonsten sind die Bezeichnungen aus Figur 3 übernommen. Figur 4b erläutert in einem weiteren Geschwindigkeitszeitdiagramm, wie eine Geschwindigkeitsdifferenz Δv erfindungsgemäß ausgeglichen wird, um die gemessene Geschwindigkeit v_M an die wahre Geschwindigkeit v_real heranzuführen.

## Patentansprüche

1. Steuergerät zur Ansteuerung für ein Fahrzeugsystem mit Schutzvarrichtung Patentansprüche mit:
- einer ersten Schnittstelle (IF2), die eine Fahrzeuggeschwindigkeit (v_M) bereitstellt
- einer zweiten Schnittstelle (IF3), die ein Signal eines Fahrdynamiksystems (ESP) und/oder eines Bremssystems (BA) bereitstellt
- einem Speicher (S), in dem wenigstens eine obere und eine untere Intervallgrenze für die Fahrzeuggeschwindigkeit gespeichert sind einer Auswerteschaltung, die das Fahrzeugsystem in Abhängigkeit von der Fahrzeuggeschwindigkeit nur innerhalb der wenigstens einen oberen und der wenigstens einen unteren Intervallgrenze ansteuert, wobei die Auswerteschaltung die Ansteuerung in Abhängigkeit von dem Signal beeinflusst **dadurch gekennzeichnet, dass** die Auswerteschaltung (µC) die Ansteuerung dadurch beeinflusst, dass die wenigstens eine obere und/oder die wenigstens eine untere Intervallgrenze um einen jeweiligen Wert verschoben werden, dass die Auswerteschaltung (µC) den jeweiligen Wert in Abhängigkeit von der Fahrzeuggeschwindigkeit (v_M) beim Einsetzen einer Fahrdynamikregelung oder dass die Auswerteschaltung den jeweiligen Wert in Abhängigkeit von einer Geschwindigkeitsdifferenz (Δv) bestimmt oder dass die Auswerteschaltung (µC) den jeweiligen Wert in Abhängigkeit von einem Zeitintervall (Δt) zwischen dem Auftreten des Signals und einer Unterschreitung der oberen oder unteren Intervallgrenze bestimmt.

2. Verfahren zur Ansteuerung eines Fahrzeugsystems mit Schutzvarrichtung Patentansprüche mit folgenden Verfahrensschritten:
- Bereitstellen einer Fahrzeuggeschwindigkeit (v_M) und eines Signals eines Fahrdynamiksystems (ESP) und/oder eines Bremssystems (BA)
- Ansteuern des Fahrzeugsystems in Abhängigkeit von der Fahrzeuggeschwindigkeit (v_M) nur innerhalb einer wenigstens einer oberen und wenigstens einer unteren Intervallgrenze für die Fahrzeuggeschwindigkeit Beeinflussen der Ansteuerung in Abhängigkeit von dem Signal, **dadurch gekennzeichnet, dass** die Ansteuerung dadurch beeinflusst wird, dass die wenigstens eine obere und/oder die wenigstens eine untere Intervallgrenze (ϕₒ,ϕᵤ)um einen jeweiligen Wert verschoben werden, dass der jeweilige Wert in Abhängigkeit von der Fahrzeuggeschwindigkeit beim Einsetzen einer Fahrdynamikregelung bestimmt wird oder dass der jeweilige Wert in Abhängigkeit von einer Geschwindigkeitsdifferenz bestimmt wird oder dass der jeweilige Wert in Abhängigkeit von einem Zeitintervall zwischen einem Auftreten des Signals und einer Unterschreitung der oberen oder unteren Intervallgrenze (ϕₒ, ϕᵤ)bestimmt wird.

## Claims

1. Control unit for actuating a vehicle system having a protection device with:
- a first interface (IF2) which makes available a vehicle velocity (v_M),
- a second interface (IF3) which makes available a signal of a vehicle movement dynamics system (ESP) and/or a brake system (BA),
- a memory (S) in which at least an upper and a lower interval limit for the vehicle velocity are stored, an evaluation circuit which actuates the vehicle system as a function of the vehicle velocity only within the at least one upper and the at least one lower interval limit, wherein the evaluation circuit influences the actuation as a function of the signal, **characterized in that** the evaluation circuit (µC) influences the actuation in such a way that the at least one upper and/or the at least one lower interval limit are shifted by a respective value, **in that** the evaluation circuit (µC) determines the respective value as a function of the vehicle velocity (v_M) when a vehicle movement dynamics controller is used, or in that the evaluation circuit determines the respective value as a function of a velocity difference (Δv), or **in that** the evaluation circuit (µC) determines the respective value as a function of a time interval (Δt) between the occurrence of the signal and undershooting of the upper or lower interval limit.

2. Method for actuating a vehicle system having a protection device, with the following method steps:
- making available a vehicle velocity (v_M) and a signal of a vehicle movement dynamics system (ESP) and/or of a brake system (BA),
- actuation of the vehicle system as a function of the vehicle velocity (v_M) only within at least one upper interval limit and at least one lower interval limit for the vehicle velocity,
- influencing the actuation as a function of the signal, **characterized in that** the actuation is influenced by the fact that the at least one upper and/or the at least one lower interval limit (ϕₒ, ϕᵤ) are shifted by a respective value, **in that** the respective value is determined as a function of the vehicle velocity when a vehicle movement dynamics controller is used, or **in that** the respective value is determined as a function of a velocity difference, or **in that** the respective value is determined as a function of a time interval between occurrence of the signal and undershooting of the upper or lower interval limit (ϕₒ, ϕᵤ).

## Revendications

1. Appareil de commande permettant de commander un système de véhicule doté d'un dispositif de protection comprenant :
- une première interface (IF2) mettant à disposition une vitesse du véhicule (v_M) ;
- une deuxième interface (IF3) mettant à disposition un signal d'un système de dynamique de conduite (ESP) et/ou d'un système de freinage (BA) ;
- une mémoire (S) dans laquelle au moins une limite d'intervalle supérieure et inférieure sont mémorisées pour la vitesse du véhicule ;
- un circuit d'analyse commandant le système de véhicule en fonction de la vitesse du véhicule seulement à l'intérieur de l'au moins une limite d'intervalle supérieure et de l'au moins une limite d'intervalle inférieure, le circuit d'analyse influençant la commande en fonction du signal ;
**caractérisé en ce que** le circuit d'analyse (µC) influence la commande en repoussant l'au moins une limite d'intervalle supérieure et/ou l'au moins une limite d'intervalle inférieure d'une valeur respective, que le circuit d'analyse (µC) détermine la valeur respective en fonction de la vitesse du véhicule (v_M) lors de la mise en place d'un réglage de la dynamique de conduite ou que le circuit d'analyse détermine la valeur respective en fonction d'une différence de vitesse (Δv) ou que le circuit d'analyse (µC) détermine la valeur respective en fonction d'un intervalle de temps (Δt) prévu entre l'émission du signal et le passage en dessous d'une limite d'intervalle supérieure ou inférieure.

2. Procédé de commande d'un système de véhicule doté d'un dispositif de protection, avec les étapes de procédé suivantes :
- mise à disposition d'une vitesse du véhicule (v_M) et d'un signal d'un système de dynamique de conduite (ESP) et/ou d'un système de freinage (BA) ;
- commande du système de véhicule en fonction de la vitesse du véhicule (v_M) seulement à l'intérieur d'au moins une limite d'intervalle supérieure et d'au moins une limite d'intervalle inférieure pour la vitesse du véhicule ;
- influence de la commande en fonction du signal ;
**caractérisé en ce que** la commande est influencée en repoussant l'au moins une limite d'intervalle supérieure et/ou l'au moins une limite d'intervalle inférieure (ϕ_{O}, ϕ_{U}) d'une valeur respective, que la valeur respective est déterminée en fonction de la vitesse du véhicule lors de la mise en place d'un réglage de la dynamique de conduite ou que la valeur respective est déterminée en fonction d'une différence de vitesse ou que la valeur respective est déterminée en fonction d'un intervalle de temps prévu entre l'émission du signal et le passage en dessous d'une limite d'intervalle supérieure ou inférieure (ϕ_{O}, ϕ_{U}).
